# EUROPÄISCHE PATENTSCHRIFT

(11) **EP 3 028 883 B1**
(45) Veröffentlichungstag und Bekanntmachung des Hinweises auf die Patenterteilung: **16.08.2017**
(21) Anmeldenummer: 14196456.9
(22) Anmeldetag: 05.12.2014
(51) Int. Cl.: B60D 5/00, B64F 1/305

(54) **Balg eines Übergangs zwischen zwei gelenkig miteinander verbundenen Fahrzeugen oder Balg des Vordachs einer Fluggastbrücke oder -treppe**
Bellows of a transition between two vehicles with a jointed connection or bellows of a canopy of an air passenger boarding bridge or staircase
Soufflet d'un passage entre deux véhicules reliés entre eux de manière articulée ou soufflet d'un avant-toit d'une passerelle ou escalier d'embarquement

(43) Veröffentlichungstag der Anmeldung: 08.06.2016
(73) Patentinhaber: Hübner GmbH & Co. KG, 34123 Kassel (DE)
(72) Erfinder: Knud, Mosaner, 34127 Kassel (DE); Karasek, Jens, 34260 Kaufungen (DE); Heinrich, Marc, 200042 Shanghai (CN)
(74) Vertreter: Patentanwälte Walther Hinz Bayer PartGmbB

(56) Entgegenhaltungen:
- EP-A1- 1 728 652
- EP-B1- 1 741 573
- DE-U1- 29 921 498

## Beschreibung

Die Erfindung betrifft einen Balg eines Übergangs zwischen zwei gelenkig miteinander verbundenen Fahrzeugteilen oder Balg des Vordachs einer Fluggastbrücke oder -treppe, wobei an dem Balg im Bereich der Seitenwand des Balges ein Spurfugenabdeckbalg angeordnet ist, wobei zur Halterung des Spurfugenabdeckbalges am Übergangsprofil mindestens ein Anbindungsprofil vorgesehen ist, wobei das Anbindungsprofil einerseits an einem Scheitel der Falte oder Welle des Balges befestigt ist, und andererseits mit einem im Querschnitt etwa U-förmigen Rahmenprofil des Spurfugenabdeckbalges verbunden ist.

Der Spurfugenabdeckbalg dient der Abdeckung der Spurfuge zwischen dem Übergangsglied, beispielsweise einem Drehteller oder einer Plattform und dem Übergangsbalg zwischen zwei gelenkig miteinander verbundenen Fahrzeugteilen, wobei der Übergangsbalg selbst kastenförmig umlaufend ausgebildet ist, und der Spurfugenabdeckbalg ähnlich dem Balg des Übergangs einzelne Wellen oder Falten aufweist, wobei Streifen aus einem beschichteten Festigkeitsträger von benachbarten Wellen oder Falten zumindest im Bereich ihres Scheitels durch Balgrahmen miteinander verbunden sind. Auch der Balg eines Vordachs einer Fluggastbrücke oder Fluggasttreppe ist aufgebaut ähnlich oder gleich dem Balg eines Übergangs, und überspannt als Übergangsglied eine Bodenplatte oder ähnliches.

Bei Gelenkfahrzeugen, und hier insbesondere bei Gelenkbussen, sind Motorwagen und Nachläufer, also die beiden Fahrzeugteile, durch ein Gelenk miteinander gekuppelt. Oberhalb des Gelenkes befindet sich das Übergangsglied, beispielsweise eine Plattform, eine Brücke oder ein Drehteller, wobei bei Gelenkbussen sich die Plattform unmittelbar auf dem Gelenk abstützt. Die Plattform ermöglicht zum einen das Hinüberwechseln von Personen von dem einen Fahrzeugteil in das andere Fahrzeugteil, bietet allerdings auch zusätzliche Stehplätze während der Fahrt. Zwischen den beiden Seitenwänden des Übergangsbalges und dem Rand des Übergangsglieds, z. B. der Plattform, besteht eine sogenannte Spurfuge, dass heißt, ein Zwischenraum zwischen der Seitenwand und dem Rand der Plattform. Um Unfälle zu vermeiden, bei denen Personen mit den Füßen in die Spurfuge gelangen, ist bekannt, diese Spurfuge abzudecken. Aus der EP 1 602 546 B1 ist in diesem Zusammenhang ein Übergangsbalg mit einem Spurfugenabdeckbalg bekannt, wobei der Spurfugenabdeckbalg hintereinander angeordnete Rahmenprofile aufweist, wobei ein jedes dieser Rahmenprofile am oberen und am unteren Ende jeweils mit dem Übergangsbalg durch ein plattenförmiges Halteelement verbunden ist. Hierbei ist vorgesehen, dass das plattenförmige Halteelement durch den Balgaußenrahmen des Balges des Überganges klemmend erfasst ist.

Des Weiteren ist aus der EP 0 215 329 B1 eine im Querschnitt kastenförmige Spurfugenabdeckung bekannt, bei der die Spurfugenabdeckung ganz ähnlich dem Übergangsbalg aus einzelnen Falten oder Wellen besteht, wobei die einzelnen Falten oder Wellen miteinander durch Klemmleisten verbunden sind. Diese Klemmleisten sind hierbei starr an der Seitenwand des Übergangsbalges angeordnet. Die Anordnung oder Befestigung der Klemmleisten der Spurfugenabdeckung an der Balgseitenwand erfolgt hierbei an dem jeweiligen Scheitel der Falten der Seitenwand des Balges, die zu dem Spurfugenabdeckbalg unmittelbar benachbart liegen. In diesem Zusammenhang ist aus der EP 1 741 573 B1 in Bezug auf die Anbindung des Spurfugenabdeckbalges an der Seitenwand eines Faltenbalges des Überganges bekannt, dass auf den der Innenseite zugerichteten Scheiteln der Falten des Faltenbalges des Überganges jeweils ein sogenanntes Einfassband vorgesehen ist, wobei an dem Einfassband eine Hülse anbringbar ist, wobei in die Hülse das Rahmenprofil des Spurfugenabdeckbalges einführbar ist. Um den Spurfugenabdeckbalg sowohl am oberen als auch am unteren Ende an der Seitenwand des Faltenbalges des Überganges befestigen zu können, sind über die Höhe der Seitenwand des Faltenbalges an einer Falte jeweils zwei derartige Hülsen beabstandet zueinander angeordnet. Allein durch das Gewicht des Spurfugenabdeckbalges verbleiben hierbei die einzelnen Rahmenprofile des Spurfugenabdeckbalges in den jeweiligen Hülsen. Hieraus wird ebenfalls deutlich, dass der Spurfugenabdeckbalg am Faltenbalg schwimmend gelagert ist.

Eine andere Art der Befestigung der Spurfugenabdeckung an dem Balg eines Überganges ist aus der EP 0 698 514 B1 bekannt. Hierbei ist vorgesehen, unmittelbar auf dem Balgrahmen des Balges des Überganges den jeweils korrespondierenden Bügelrahmen des Spurfugenabdeckbalges aufzusetzen, und oben und unten mit einer Kappe zu sichern, wobei die Kappe sowohl mit dem Balgrahmen des Balges des Übergangs als auch mit dem Bügelrahmen verschraubt ist. Diese Art der Befestigung des Spurfugenabdeckbalges an dem Balg des Übergangs hat sich als sehr zuverlässig erwiesen, weshalb solche Bälge mit derartigen Spurfugenabdeckbälgen vielfach im Einsatz sind.

Nun ist bekannt, dass die Spurfugenabdeckbälge auf der Innenseite des Übergangsbalges an der Balgseitenwand befestigt sind. Passagiere lehnen sich insofern häufig an derartigen Spurfugenabdeckbälgen an bzw. stützen sich auf diesen ab. Darüber hinaus ist auch nicht zu verkennen, dass die Spurfugenabdeckbälge ein nicht unerhebliches Eigengewicht besitzen. Beides sorgt dafür, dass derartige Bälge mit der Zeit durchhängen. Dies hat zur Folge, dass die Bälge dem Übergangsglied, z. B. auf der Plattform unten aufstehen. Dies wiederum hat zur Folge, dass in diesem Bereich die Stoffbahnen zwischen den Rahmenprofilen des Spurfugenabdeckbalges im Bereich der Plattform ausfransen, somit der Verschleiß des Spurfugenabdeckbalges häufig genug größer ist, als der des Übergangsbalges. Die gleiche oder ähnliche Problematik ist auch bei Bälgen von Vordächern von Fluggastbrücken oder-treppen bekannt, wenn diese einen Spurfugenabdeckbalg aufweisen.

Die der Erfindung zugrunde liegende Aufgabe besteht nun darin, den Verschleiß des Spurfugenabdeckbalges im Bereich seines unteren Endes, also des dem Übergangsglied, z. B. der Plattform zugewandten Endes zu vermindern.

Zur Lösung der Aufgabe wird erfindungsgemäß vorgeschlagen, dass das Anbindungsprofil auf seiner dem Spurfugenabdeckbalg zugewandten Seite eine Aufnahmehülse aufweist, wobei das Rahmenprofil in die Aufnahmehülse einsteckbar ist, wobei innerhalb der max. möglichen Eintauchtiefe des Rahmenprofils in die Aufnahmehülse die Eintauchtiefe durch eine Begrenzungseinrichtung festlegbar ist. Durch die Festlegung der Eintauchtiefe durch die Begrenzungseinrichtung wird die Möglichkeit eröffnet, dass dann, wenn der Spurfugenabdeckbalg durchhängt, mithin z. B. auf der Plattform zumindest partiell aufsteht, dass über die Begrenzungseinrichtung die Eintauchtiefe gegebenenfalls vermindert wird, und so der Balg meistens in der Mitte angehoben wird, um so einen Verschleiß des Spurfugenabdeckbalges am unteren Ende zu vermeiden.

Vorteilhaft ist hierbei nicht nur das Anbindungsprofil an dem Scheitel der Falte oder Welle befestigt, sondern an dem Balgaußenrahmen insbesondere der Falte eines Faltenbalges. D.h., die Gewichtskraft geht immer in den Balgaußenrahmen, was ein Einknicken des Balges verhindert.

Vorteilhafte Merkmale und Ausgestaltungen der Erfindung ergeben sich aus den Unteransprüchen.

So ist insbesondere vorgesehen, dass die Begrenzungseinrichtung einen auf dem Rahmenprofil des Spurfugenabdeckbalges angeordneten Stopper umfasst. Durch den auf dem Rahmenprofil aufsitzenden Stopper wird erreicht, dass die Eintauchtiefe des Rahmenprofiles in die Aufnahmehülse festlegbar ist.

Vorteilhaft ist der Stopper verschieblich auf dem Rahmenprofil angeordnet, um die Eintauchtiefe variabel zu gestalten; mithin dient der Stopper auch der Justierung der Lage des Spurfugenabdeckbalges an der Seitenwand des Übergangsbalges. Um zu verhindern, dass das Rahmenprofil sich in der Hülse selbstständig verschiebt, kann das Rahmenprofil einen Anschlag für den Stopper aufweisen. Das heißt, der Stopper dient einerseits der Justierung der Eintauchtiefe und andererseits der Begrenzung der Eintauchtiefe, gegebenenfalls in Verbindung mit einem gesonderten Anschlag. Der Anschlag am Rahmenprofil kann nach einem weiteren Merkmal der Erfindung als Aufbiegung des Rahmenprofils ausgebildet sein.

Um eine sichere Führung des Stoppers auf dem Rahmenprofil zu gewährleisten, ist der Stopper auf das Rahmenprofil vorteilhaft aufclipsbar. Hierzu ist nach einem weiteren Merkmal der Erfindung vorgesehen, dass der Stopper im Querschnitt in etwa U-förmig ausgebildet ist, und dass das Rahmenprofil durch den Stopper zumindest partiell umgriffen wird. Das heißt, dass der Stopper im Wesentlichen formschlüssig auf dem Rahmenprofil aufsitzt.

Nach einem weiteren Merkmal der Erfindung weist der im Querschnitt U-förmig ausgebildete Stopper am Steg ein Zäpfchen auf, das in das im Querschnitt in etwa U-förmige Rahmenprofil hineinragt, um eine exakte Führung des Stoppers auf dem Rahmenprofil zu bewerkstelligen.

Das Rahmenprofil kann in der Aufnahmehülse gegen Verschiebung gesichert sein. Das heißt, dass hierdurch sichergestellt ist, dass das Rahmenprofil nicht aus der Aufnahmehülse herausgelangt. Die Sicherung kann hierbei kraft- und/oder formschlüssig erfolgen, z. B. durch Sicken der Aufnahmehülse im Bereich der Eindringtiefe des Rahmenprofils. Um nun einen Austausch zu ermöglichen, weist nach einem weiteren Merkmal der Erfindung die Aufnahmehülse einen sich über die Höhe der Aufnahmehülse erstreckenden Schlitz auf. Über den Schlitz kann die Aufnahmehülse geweitet werden, sodass auf diese Weise der Austausch des Spurfugenabdeckbalges, trotz der Sicherung der Rahmenprofile in der jeweiligen Aufnahmehülse, ermöglicht wird.

Weiterhin ist vorgesehen, dass das Anbindungsprofil durch den Balgaußenrahmen kraft- und/oder formschlüssig erfassbar ist. Dies kann im Einzelnen dadurch bewerkstelligt werden, dass der im Querschnitt U-förmige Balgaußenrahmen das Anbindungsprofil nicht nur klemmend erfasst, sondern beispielsweise im Bereich des Anbindungsprofils der Balgaußenrahmen gesickt ist.

Die Vorteile der Erfindung stellen sich zusammengefasst wie folgt dar:
- Preiswerte Herstellung der Anbindungsprofile im Strangpressverfahren;
- Leichte Montage und Demontage des Spurfugenabdeckbalges;
- Verminderung des Verschleißes des Spurfugenabdeckbalges durch Nachjustierung der Anbindung des Spurfugenabdeckbalges in der Seitenwand des Balges ohne besonderes Werkzeug;
- Durch die unmittelbare Anbindung des Spurfugenabdeckbalges an den Balgaußenrahmen wird ein Einknicken des Balges verhindert;
- Es sind keine zusätzlichen Bauteile wie Kappen und Schrauben erforderlich.

Anhand der Zeichnungen wird die Erfindung nachstehend beispielhaft anhand eines Übergangsbalges mit einem Spurfugenabdeckbalg näher erläutert. Da der Balg des Vordachs einer Fluggastbrücke oder -treppe ähnlich oder sogar gleich aufgebaut ist, gelten die nachstehenden Ausführungen auch für solche Bälge mit Spurfugenabdeckung.
- Fig. 1: zeigt ein Gelenkfahrzeug mit einem Übergang zwischen den beiden Fahrzeugteilen des Gelenkfahrzeugs, wobei der Übergang einen Balg aufweist;
- Fig. 2: zeigt schematisch den Balg in perspektivischer Darstellung, wobei der an der Balgseitenwand angeordnete Spurfugenabdeckbalg erkennbar ist;
- Fig. 3: zeigt eine Darstellung, bei der am Übergangsbalg beabstandet zueinander übereinander an der Seitenwand des Balges zwei Anbindungsprofile vorgesehen sind, die der Aufnahme der beiden Enden des Rahmenprofiles dienen, bevor das Rahmenprofil mit den Anbindungsprofilen in Verbindung gebracht wird;
- Fig. 4: zeigt eine Darstellung gemäß Fig. 3, wobei das Rahmenprofil mit den Anbindungsprofilen verbunden ist;
- Fig. 5a: zeigt eine explosionsartige Darstellung, bevor das Rahmenprofil durch die Aufnahmehülse des Anbindungsprofiles aufgenommen wird;
- Fig. 5b: zeigt das Rahmenprofil und den Stopper in einer Explosionsdarstellung;
- Fig. 5c: zeigt das Anbindungsprofil in perspektivischer Darstellung.

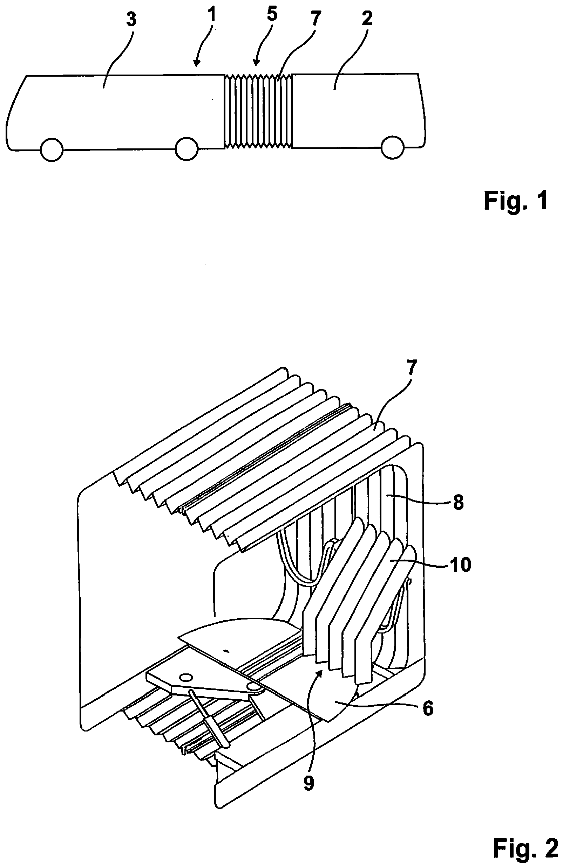

Aus der Darstellung gemäß Fig. 1 ist das Gelenkfahrzeug 1 mit den beiden Fahrzeugteilen 2 und 3 erkennbar, die durch den Übergang 5 miteinander in Verbindung stehen. Der Übergang 5 umfasst den Übergangsbalg 7.

Die Darstellung gemäß Fig. 2 zeigt den Balg 7 des Übergangs 5 mit dem Spurfugenabdeckbalg 10, der an der Balgseitenwand 8 des Balges 7 des Übergangs 5 angeordnet ist. Der Spurfugenabdeckbalg 10, der im Querschnitt in etwa trapezförmig ausgebildet ist, überdeckt die Spurfuge 9, die sich zwischen der Plattform oder dem Drehteller 6 als Übergangsglied und der Balgseitenwand 8 ergibt.

Der Spurfugenabdeckbalg 10 besteht aus einzelnen hintereinander angeordneten Rahmenprofilen 12, die miteinander zur Bildung des Spurfugenabdeckbalges 10 durch Streifen aus einem mit einem Elastomer beschichteten Festigkeitsträger miteinander in Verbindung stehen. Die Rahmenprofile 12 sind mit ihren beiden Enden an der Balgseitenwand 8befestigt. Die Ausbildung eines Spurfugenabdeckbalges 10 ist seit Langem bekannt und muss an dieser Stelle insofern nicht näher erläutert werden.

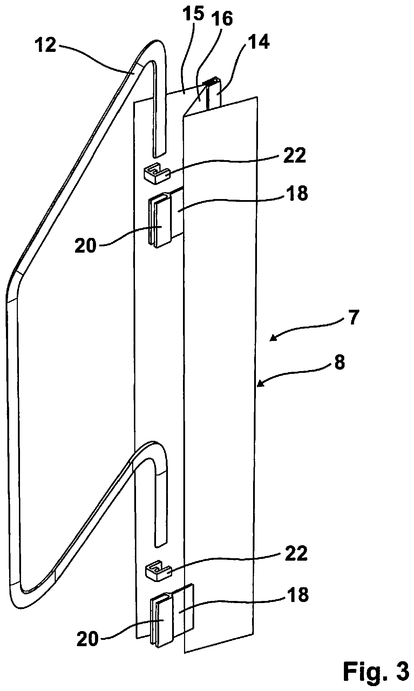

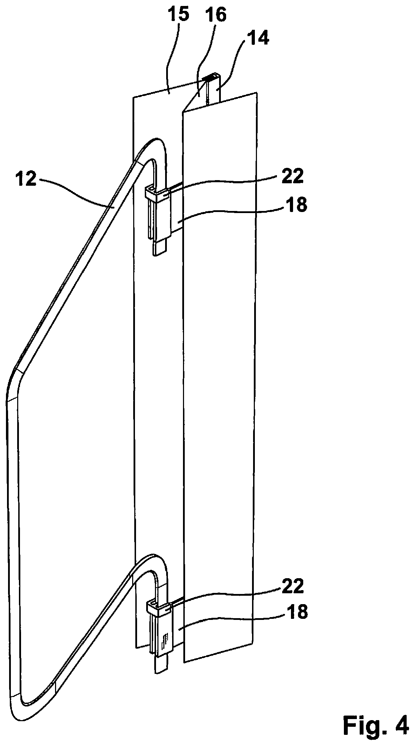

Aus Fig. 3 und Fig. 4 ist im Einzelnen erkennbar, dass der Übergangsbalg 7, der sich als Faltenbalg darstellt, auf der Außenseite mehrere hintereinander angeordnete Balgaußenrahmen 14 aufweist. Ein solcher Balgaußenrahmen 14 ist im Querschnitt in etwa U-förmig und nimmt zwei Faltenbalgstreifen 15, 16 auf. Die Faltenbalgstreifen 15, 16 werden auf der Innenseite durch ein Einfassband miteinander verbunden. Im vorliegenden Fall nimmt der jeweilige Balgaußenrahmen 14 allerdings nicht nur die Faltenbalgstreifen 15, 16 auf, sondern gleichfalls zwei mit 18 bezeichnete Anbindungsprofile, die übereinander beabstandet zueinander durch den Balgaußenrahmen 14 gehalten werden. Das heißt, das Anbindungsprofil 18 wird durch den U-förmig ausgebildeten Balgaußenrahmen 14 ähnlich den Faltenbalgstreifen 15, 16 klemmend erfasst. Gegebenenfalls kann, um ein Verrutschen des Anbindungsprofils 18 in dem Balgaußenrahmen 14 zu verhindern, vorgesehen sein, dass Anbindungsprofil 18 nicht nur kraftschlüssig zu sichern, sondern auch formschlüssig, z. B. durch Sicken der Schenkel des U-förmig ausgebildeten Balgaußenrahmens 14. Im vorliegenden Fall weist, wie bereits ausgeführt, der Balgaußenrahmen 14 zwei beabstandet übereinander angeordnete Anbindungsprofile 18 auf, um die beiden Enden des Rahmenprofiles 12 aufnehmen zu können. Das Anbindungsprofil 18 steht über die Tiefe der Falten des Faltenbalges 7 über und ragt insofern in den Innenraum des Übergangs 5.

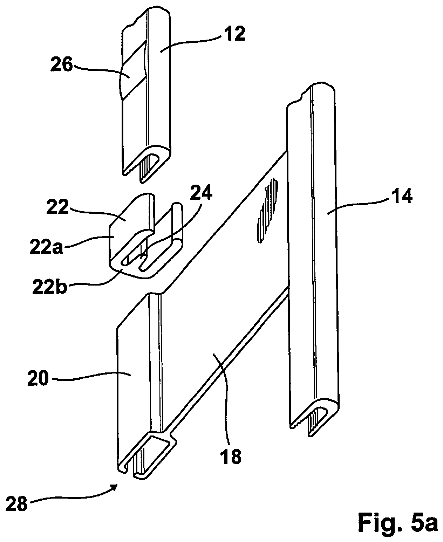

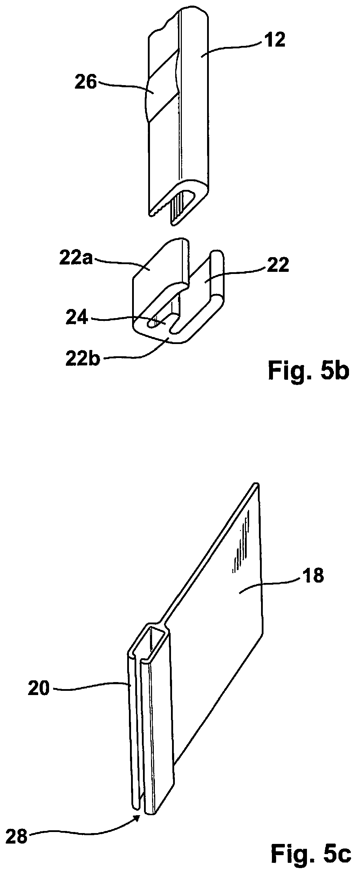

Betrachtet man nunmehr die Fig. 5a, so erkennt man, dass das Anbindungsprofil 18 am vorderen Ende, dass heißt, an dem dem Innenraum des Übergangs 5 zugewandten Ende, eine Aufnahmehülse 20 aufweist, die über die Höhe verlaufend Schlitze aufweist. Die Aufnahmehülse 20 besitzt einen lichten Querschnitt, der in etwa dem des U-förmig ausgebildeten Rahmenprofiles 12 entspricht, das durch die Aufnahmehülse 20 aufgenommen wird.

Darüber hinaus ist aus Fig. 5a der mit 22 bezeichnete Stopper erkennbar, der auf das Rahmenprofil 12 aufgeclipst wird, und das Rahmenprofil 12 kraftschlüssig erfasst. Der Stopper 22 besitzt zwei Schenkel 22a, sowie den Steg 22b, wobei an dem Steg 22b ein nach innen gerichtetes Zäpfchen 24 angeordnet ist, dass in das U-förmige Rahmenprofil 12 hineinragt und der sauberen Führung des Stoppers 22 auf dem Rahmenprofil 12 dient.

Der Stopper 22 ist auf dem Rahmenprofil 12 verschieblich gelagert, und zwar derart verschieblich gelagert, dass in Abhängigkeit von der Stellung des Stoppers 22 auf dem Rahmenprofil 12 die Eindringtiefe des Rahmenprofiles 12 in die Aufnahmehülse 20 einstellbar ist. In diesem Zusammenhang kann das Rahmenprofil 12 einen Anschlag 26 aufweisen, der sich z. B. durch Aufbiegen des Rahmenprofiles herstellen lässt, und der den Weg des Stoppers begrenzt. Denkbar ist allerdings auch, den Stopper 22 derart auszubilden, dass dieser z. B. aufgrund entsprechender Reibbeiwerte selbstständig eine einmal vorgegebene Stellung beibehält.

Die Aufnahmehülse 20 weist einen sich über die Höhe der Aufnahmehülse 20 erstreckenden Schlitz 28 auf, der folgende Funktion hat. Für den Fall, dass das Rahmenprofil 12 in der Aufnahmehülse 20 gesichert wird, beispielsweise durch Sicken der Aufnahmehülse 20, kann durch Aufbiegen der Aufnahmehülse 20 über den Schlitz 28 das Rahmenprofil 12 wieder herausgezogen werden. Das heißt, dass hierdurch die Montage sowie die Demontage wesentlich erleichtert wird, wie dies im Gegensatz dazu bei einem Profil der Fall wäre, das keinen solchen Schlitz aufweist.

Für die Montage wird nun derart vorgegangen, dass das Rahmenprofil 12 mit seinen Enden in die Aufnahmehülse 20 des oberen und unteren Anbindungsprofiles 18 eingeschoben wird, wobei durch den Stopper 22 festgelegt wird, bis zu welcher Eindringtiefe das Rahmenprofil 12 in die Aufnahmehülse 20 eingesteckt wird. Die Eindringtiefe bestimmt sich aus dem Abstand, den die Unterseite des Spurfugenabdeckbalges 10 zu der Plattform oder dem Drehteller 6 haben soll. Ist die Eindringtiefe festgelegt worden, so kann ein Anschlag 26 gebildet werden, beispielsweise durch Aufbiegen des Rahmenprofiles 12 an geeigneter Stelle, wobei der Anschlag mit dem Stopper 22 die Begrenzungseinrichtung bildet. Denkbar ist allerdings auch, den Stopper 22 derart stramm auf das Rahmenprofil 12 aufzusetzen, dass ein solcher Anschlag nicht erforderlich ist. Ist nun das Rahmenprofil 12 in die Aufnahmehülse 20 eingeschoben worden, kann durch eine form- und/oder kraftschlüssige Verbindung zwischen der Aufnahmehülse 20 des Anbindungsprofiles 18 und dem Rahmenprofil 12, beispielsweise durch Sicken der Aufnahmehülse 20 des Rahmenprofils 12, die Aufnahmehülse 20 gegen Herausheben gesichert werden.

Hat sich nun im Laufe der Zeit der Spurfugenabdeckbalg 10 gesetzt, und steht mit dem unteren Ende auf der Plattform bzw. dem Drehteller 6 auf, dann kann die Anbindung des Spurfugenabdeckbalges 10 an der Seitenwand 8 des Balges 7 des Übergangs 5 nachjustiert werden. Das heißt, dass die Rahmenprofile 12 des Spurfugenabdeckbalges 10 an den entsprechenden Stellen, wo der Spurfugenabdeckbalg 10 durchhängt, aus den Aufnahmehülsen 20 herausgezogen werden, und die Eindringtiefe des Rahmenprofils 12 in die Aufnahmehülse 20 neu nachjustiert wird. Ist in diesem Zusammenhang auch die Aufnahmehülse 20 gesickt worden, um das Rahmenprofil 12 gegen Herausheben zu sichern, dann kann über den Schlitz 28 diese form- bzw. kraftschlüssige Verbindung aufgehoben werden. Das heißt, dass durch die Erfindung eine leichte Montage und auch eine leichte Demontage möglich ist, ohne dass, wie beim Stand der Technik, irgendwelche Kappen abgeschraubt werden müssen, die die Rahmenprofile mit dem Balgaußenrahmen verbinden. Gegebenenfalls kann es ausreichend sein, wenn eine Begrenzungseinheit mit Stopper 22 und Anschlag 26 nur für das obere Ende des Rahmenprofils 12 vorgesehen ist.

### Bezugszeichenliste:

- 1: Gelenkfahrzeug
- 2: Fahrzeugteil
- 3: Fahrzeugteil
- 5: Übergang
- 6: Drehteller bzw. Plattform
- 7: Balg
- 8: Balgseitenwand
- 9: Spurfuge
- 10: Spurfugenabdeckbalg
- 12: Rahmenprofil
- 14: Balgaußenrahmen
- 15: Faltenbalgstreifen
- 16: Faltenbalgstreifen
- 18: Anbindungsprofil
- 20: Aufnahmehülse
- 22: Stopper
- 22a: Schenkel
- 22b: Steg
- 24: Zäpfchen
- 26: Anschlag
- 28: Schlitz

## Patentansprüche

1. Balg (7) eines Übergangs (5) zwischen zwei gelenkig miteinander verbundenen Fahrzeugteilen (2, 3) oder Balg des Vordachs einer Fluggastbrücke oder -treppe, wobei an dem Balg (7) im Bereich der Seitenwand (8) des Balges (7) ein Spurfugenabdeckbalg (10) angeordnet ist, wobei zur Halterung des Spurfugenabdeckbalges (10) mindestens ein Anbindungsprofil (18) vorgesehen ist, wobei das Anbindungsprofil (18) einerseits an einem Scheitel der Falte der Welle des Balges befestigt ist, und andererseits mit einem im Querschnitt in etwa U-förmigen Rahmenprofil (12) des Spurfugenabdeckbalges (10) verbunden ist,
**dadurch gekennzeichnet,**
**dass** das Anbindungsprofil (18) auf seiner dem Spurfugenabdeckbalg (10) zugewandten Seite eine Aufnahmehülse (20) aufweist, wobei das Rahmenprofil (12) in die Aufnahmehülse (20) einsteckbar ist, wobei innerhalb der max. möglichen Eintauchtiefe des Rahmenprofils (12) in die Aufnahmehülse (20) die Eintauchtiefe durch eine Begrenzungseinrichtung festlegbar ist.

2. Balg (7) nach Anspruch 1,
**dadurch gekennzeichnet,**
**dass** die Begrenzungseinrichtung einen auf dem Rahmenprofil (12) des Spurfugenabdeckbalges (10) angeordneten Stopper (22) umfasst.

3. Balg (7) nach Anspruch 2,
**dadurch gekennzeichnet,**
**dass** der Stopper (22) verschieblich auf dem Rahmenprofil (12) angeordnet ist.

4. Balg (7) nach Anspruch 2 oder 3,
**dadurch gekennzeichnet,**
**dass** das Rahmenprofil (12) einen Anschlag für den Stopper (22) aufweist.

5. Balg (7) nach einem der Ansprüche 2 bis 4,
**dadurch gekennzeichnet,**
**dass** der Stopper (22) auf das Rahmenprofil (12) aufclipsbar ist.

6. Balg (7) nach Anspruch 5,
**dadurch gekennzeichnet,**
**dass** der Stopper (22) im Querschnitt in etwa U-förmig ausgebildet ist, und das Rahmenprofil (12) zumindest partiell umgreift.

7. Balg (7) nach Anspruch 6,
**dadurch gekennzeichnet,**
**dass** der im Querschnitt U-förmig ausgebildete Stopper (22) am Steg (22b) ein Zäpfchen (24) aufweist, das in das im Querschnitt in etwa U-förmige Rahmenprofil (12) hineinragt.

8. Balg (7) nach einem der voranstehenden Ansprüche,
**dadurch gekennzeichnet,**
**dass** die Aufnahmehülse (20) einen sich über die Höhe der Aufnahmehülse (20) erstreckenden Schlitz (28) aufweist.

9. Balg (7) nach einem der Ansprüche 4 bis 8,
**dadurch gekennzeichnet,**
**dass** der Anschlag (26) am Rahmenprofil (12) als Aufbiegung des Rahmenprofils (12) ausgebildet ist.

10. Balg (7) nach einem der voranstehenden Ansprüche,
**dadurch gekennzeichnet,**
**dass** das Anbindungsprofil (18) durch den Balgaußenrahmen (14) kraft- und/oder formschlüssig erfassbar ist.

11. Balg (7) nach einem der voranstehenden Ansprüche,
**dadurch gekennzeichnet,**
**dass** das Rahmenprofil (12) in der Aufnahmehülse (20) gegen Verschiebung gesichert ist.

12. Balg (7) nach Anspruch 11,
**dadurch gekennzeichnet,**
**dass** die Sicherung kraft- und/oder formschlüssig erfolgt.

13. Balg (7) nach einem der voranstehenden Ansprüche,
**dadurch gekennzeichnet,**
**dass** das Anbindungsprofil (18) an einem Balgaußenrahmen (14) befestigt ist.

## Claims

1. A bellows (7) of a gangway (5) between two articulately connected vehicle parts (2, 3) or a bellows of the canopy of a passenger boarding bridge or stairs, wherein a track joint covering bellows (10) is disposed on the bellows (7) in the area of the lateral wall (8) of the bellows (7), wherein at least one connection profile (18) is provided for retaining the track joint covering bellows (10), wherein the connection profile (18) is attached on the one hand to a crest of the fold or corrugation of the bellows and on the other hand to a frame profile (12) of the track joint covering bellows (10) having an approximately U-shaped cross-section,
**characterized in that**
the connection profile (18) comprises a receiving sheath (20) on its side oriented toward the track joint covering bellows (10), wherein the frame profile (12) is insertable into the receiving sheath (20), wherein the depth of insertion of the frame profile (12) into the receiving sheath (20) can be defined within the maximum range of the insertion depth by means of a limiting device.

2. The bellows (7) according to claim 1,
**characterized in that**
the limiting device includes a stopper (22) disposed on the frame profile (12) of the track joint covering device (10).

3. The bellows (7) according to claim 2,
**characterized in that**
the stopper (22) is slidably disposed on the frame profile (12).

4. The bellows (7) according to claim 2 or 3,
**characterized in that**
the frame profile (12) comprises a limit-stop for the stopper (22).

5. The bellows (7) according to claim 2 to 4,
**characterized in that**
the stopper (22) can be clipped onto the frame profile (12).

6. The bellows (7) according to claim 5,
**characterized in that**
the stopper (22) has an approximately U-shaped cross-section and at least partially encompasses the frame profile (12).

7. The bellows (7) according to claim 6,
**characterized in that**
the cross-sectionally U-shaped stopper (22) comprises a peg (24) at the base (22b) of the U, which protrudes into the frame profile (12) with an approximately U-shaped cross-section.

8. The bellows (7) according to one of the afore-mentioned claims,
**characterized in that**
the receiving sheath (20) comprises a slot (28) extending along the height of the receiving sheath (20).

9. The bellows (7) according to one of the claims 4 to 8,
**characterized in that**
the limit-stop (26) on the frame profile (12) is formed by bending the frame profile (12) upward.

10. The bellows (7) according to one of the afore-mentioned claims,
**characterized in that**
the connection profile (18) can be grasped by the bellows outer frame (14) in a positively and/or non-positively fitted manner.

11. The bellows (7) according to one of the afore-mentioned claims,
**characterized in that**
the frame profile (12) can be secured in the receiving sheath (20) to prevent displacement.

12. The bellows (7) according to claim 11,
**characterized in that**
the securement is carried out as a non-positive and/or positive fit.

13. The bellows (7) according to one of the afore-mentioned claims,
**characterized in that**
the connection profile (18) is fastened to a bellows outer frame (14).

## Revendications

1. Soufflet (7) d'un passage d'intercommunication (5) entre deux parties de véhicule (2, 3) reliées de manière articulée ou soufflet de l'auvent d'une passerelle ou d'escaliers d'embarquement, où un soufflet de recouvrement de joint de voie (10) est disposé au niveau du soufflet (7) dans la région de la paroi latérale (8) du soufflet (7), où au moins un profil de connexion (18) est prévu pour la fixation du soufflet de recouvrement de joint de voie (10), où le profil de connexion (18) est fixé d'une part à une crête du pli ou de l'ondulation du soufflet et d'autre part à un profil de cadre (12) de section transversale en forme de U du soufflet de recouvrement de joint de voie (10),
**caractérisé en ce que**
le profil de connexion (18) comprend une douille de réception (20) sur son côté orienté vers le soufflet de recouvrement de joint de voie (10), où le profil de cadre (12) est insérable dans la douille de réception (20), où la profondeur d'insertion du profil de cadre (12) dans la douille de réception (20) peut être fixée au moyen d'un dispositif de limitation dans les limites de la profondeur d'insertion maximale possible.

2. Soufflet (7) selon la revendication 1,
**caractérisé en ce que**
le dispositif de limitation comprend une butée (22) disposée sur le profil de cadre (12) du soufflet de recouvrement de joint de voie (10).

3. Soufflet (7) selon la revendication 2,
**caractérisé en ce que**
la butée (22) est disposée de manière coulissante sur le profil de cadre (12).

4. Soufflet (7) selon la revendication 2 ou 3,
**caractérisé en ce que**
le profil de cadre (12) comprend un butoir pour la butée (22).

5. Soufflet (7) selon l'une des revendications 2 à 4,
**caractérisé en ce que**
la butée (22) peut être clipsée sur le profil de cadre (12).

6. Soufflet (7) selon la revendication 5,
**caractérisé en ce que**
la butée (22) a une coupe transversale approximativement en forme de U et saisit au moins partiellement le profil de cadre (12).

7. Soufflet (7) selon la revendication 6,
**caractérisé en ce que**
la butée (22) de coupe transversale en forme de U comprend un tenon (24) au niveau de la base du U (22b), qui fait saillie dans le profil de cadre (12) de coupe transversale approximativement en forme de U.

8. Soufflet (7) selon l'une des revendications précédentes,
**caractérisé en ce que**
la douille de réception (20) comprend une fente (28) s'étendant sur la hauteur de la douille de réception (20).

9. Soufflet (7) selon l'une des revendications 4 à 8,
**caractérisé en ce que**
le butoir (26) est formé sur le profil de cadre (12) sous forme de courbure du profil de cadre (12).

10. Soufflet (7) selon l'une des revendications précédentes,
**caractérisé en ce que**
le profil de connexion (18) peut être saisi par le cadre extérieur de soufflet (14) par une liaison de force et/ou de forme.

11. Soufflet (7) selon l'une des revendications précédentes,
**caractérisé en ce que**
le profil de cadre (12) est fixé dans la douille de réception (20) d'une manière l'empêchant de se déplacer.

12. Soufflet (7) selon la revendication 11,
**caractérisé en ce que**
la fixation se fait par liaison de force et/ou de forme.

13. Soufflet (7) selon l'une des revendications précédentes,
**caractérisé en ce que**
le profil de connexion (18) est fixé à un cadre extérieur de soufflet (14).
